(19) Europäisches Patentamt
European Patent Office
Office européen des brevets

(11) EP 3 733 737 A1

(12) **EUROPEAN PATENT APPLICATION**

(43) Date of publication:
**04.11.2020 Bulletin 2020/45**

(51) Int Cl.:
***C08G 69/26*** *(2006.01)* ***C08G 69/28*** *(2006.01)*

(21) Application number: **19172336.0**

(22) Date of filing: **02.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Solvay Specialty Polymers USA, LLC.**
**Alpharetta, GA 30005-3914 (US)**

(72) Inventors:
- **JEOL, Stéphane**
  **Cumming, GA 30041 (US)**
- **FLORES, Joel**
  **Alpharetta, GA 30004 (US)**

(74) Representative: **Fiorucci, Hélène**
**Solvay S.A.**
**Rue de Ransbeek, 310**
**1120 Bruxelles (BE)**

(54) **PROCESS FOR PREPARATION OF POLYAMIDES**

(57) The present invention relates to a process for preparing a polyamide (PA) by polycondensation of a diamine component containing p-xylylene diamine (PXD) and/or m-xylylene diamine (MXD), and at least one long chain aliphatic dicarboxylic acid HOOC-$(CH_2)_n$-COOH, wherein n varies between 12 and 20, inclusive.

EP 3 733 737 A1

## Description

### Technical Field

The present invention relates to a process for preparing a polyamide (PA) by polycondensation of a diamine component containing p-xylylene diamine (PXD) and/or m-xylylene diamine (MXD), and at least one long chain aliphatic dicarboxylic acid $HOOC-(CH_2)_n-COOH$, wherein n varies between 12 and 20, inclusive.

### Background Art

The Applicant has identified a new class of polyamides having improved properties. These polyamides derive from *m*-xylylene diamine and/or *p*-xylylene diamine, and at least one long chain aliphatic dicarboxylic acid $HOOC-(CH_2)_n-COOH$, wherein n varies between 12 and 20, inclusive.

Polyamides are generally produced by a dehydration polycondensation of aqueous solutions of diamine monomers and dicarboxylic acid monomers. For the preparation of polyamide 6,6 (i.e. nylon 66) for example, equivalent amounts of hexamethylenediamine and adipic acid are combined with water in a reactor. The salts mixture is then heated and water removed from the reaction mixture in order to drive the formation of amide bonds from the acid and amine functions.

The article from Kazuo Saotone and Hiroshi Komoto (Journal of Polymer Science, Vol 5, 107-117, 1967) describes the preparation of N-Alkylsubstituted polyamides and copolyamides from N,N'-dialkyl p-xylylenediamines and N,N'-dialkyl hexamethylene diamine (in which the alkyl is specifically methyl or ethyl) with long chain aliphatic dicarboxylic acids. The polyamides and copolyamides described in this article were prepared by dissolution of the diamines and diacids in ethanol, first heating to 220°C for 5 hours, second heating at 250 °C for 3 hours, and last heating for 2 hours under reduced pressure. The polymers are then treated in boiling water for one hour to induce crystallisation.

The article from Heidecker et al. (Antec 2002, Vol 3, 3624-3628) relates to liquid crystalline polymers (LCP), presenting three states: a solid phase, a liquid crystalline phase and a liquid phase containing no intrinsic order. These polymers are obtained by melt-polymerizing various aliphatic and aromatic diamines with a ratio of 4,4-dimethyl bibenzoate (rigid diester) and 1,18-octadecanedioic acid (flexible C18 diacid). This process is known to provide side reactions of N-methylation of amines and generate polyamides with lower regularity and generally with lower melting temperatures.

The patent CA 2 565 483 (Degussa, 2005) describes the preparation of various semi-crystalline polyamides, starting from m-xylylenediamine. The preparation process of these polyamides is carried out in deionized water in the presence of an aqueous solution of hypophosphorous acid.

None of the above-listed documents describe however a water-free polymerization process to prepare polyamides derived from *m*-xylylene diamine and/or *p*-xylylene diamine, and at least one long chain aliphatic dicarboxylic acid $HOOC-(CH_2)_n-COOH$, wherein n varies between 12 and 20, inclusive.

### Summary of invention

An aspect of the present invention relates to a process for preparing a polyamide (PA) by melt-polymerization of a diamine component containing at least 50 mol.% of *p*-xylylene diamine and/or *m*-xylylene diamine, and a dicarboxylic acid component containing at least 50 mol.% of a dicarboxylic acid of formula (I): $HOOC-(CH_2)_n-COOH$ wherein n varies between 12 and 20 (inclusive), comprising the step of maintaining a reaction mixture during polymerisation in a state of uniform liquid, wherein the process is carried out in the absence of added water or in the presence of an amount of added water less than 5 wt.% based on the total weight of the reaction mixture. Preferably, the dicarboxylic acid of formula (I) is 1,18-octadecanedioic acid.

In some embodiments, the process comprises:

a) heating the dicarboxylic acid component at a temperature Ta (°C) higher than its melting point $Tm_{DA}$ (°C), to produce a molten dicarboxylic acid component, and

b) adding a first molar amount ($n_1$) of the diamine component to the molten dicarboxylic acid component and raising the temperature of the reaction mixture to a temperature Tb (°C) such that the reaction mixture is in a state of uniform liquid,

c) adding a second molar amount ($n_2$) of the diamine component to the molten dicarboxylic acid component and raising the temperature of the reaction mixture to a temperature Tc (°C) such that the reaction mixture is maintained in a state of uniform liquid,

d) repeating step c) until the overall molar ratio of the diamine component to the dicarboxylic acid component is within the range of 0.90 to 1.10, preferably 0.95 to 1.05, more preferably 0.98 to 1.02.

The polyamide (PA) obtained from this process preferably comprises at least 50 mol.% of recurring units ($R_{PA}$) of formula (II) (based on the total number of moles in the polyamide):

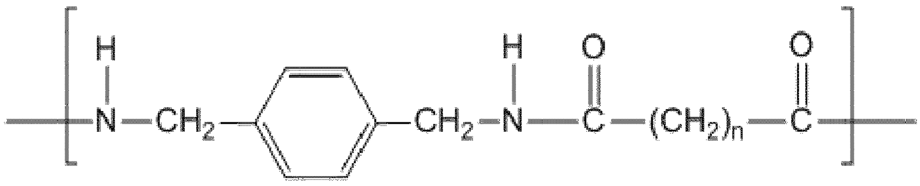

(II)

wherein n varies between 12 and 20 (inclusive).

The process of the present invention can be carried out in a batch-wise manner or in a continuous manner.

**Disclosure of the invention**

Described herein is a process for preparing a polyamide (PA), specifically a polyamide derived from a dicarboxylic acid component containing at least one long chain aliphatic dicarboxylic acid HOOC-$(CH_2)_n$-COOH, wherein n varies between 12 and 20 (inclusive) and a diamine component containing at least *m*-xylylene diamine (MXD) and/or *p*-xylylene diamine (PXD) in the absence of water.

The present invention relates to a process for preparing a polyamide (PA) by polymerization (or polycondensation) wherein a rise in the temperature of the reaction mixture is carefully monitored and controlled, in order for the reaction mixture to be continuously in a state of uniform liquid during polymerisation. Within the context of the present invention, the term "state of uniform liquid" means that the reaction mixture remains in a fluidized state without any solidification and/or precipitation of the resulting polyamide. During polymerisation, the reaction mixture is constantly heated to increasing temperatures such that the polyamide under preparation is in a molten state. The minimal temperature at which the reaction mixture should be heated can generally be determined based on the melting point of the polyamide being prepared. The melting point of the polyamide being prepared may vary over polymerisation time based on the quantity of reactants involved in the reaction, notably the quantity of limiting reactant if for example one of the reactant is progressively added in the reaction mixture. In this case, the melting point of the polyamide being prepared can be determined based on the complete conversion of the limiting reactant monomer. As the limiting reactant may be added sequentially in the reaction mixture, several temperature rises/increments may be necessary in order to prepare the polyamide of the present invention. Each step of the polymerization process is then conducted at a temperature not less than the melting point of the polyamide being produced.

The present invention more precisely relates to a process for preparing a polyamide (PA) by melt-polymerization of a diamine component containing at least 50 mol.% of *p*-xylylene diamine (PXD) and/or *m*-xylylene diamine (MXD), and a dicarboxylic acid component containing at least 50 mol.% of a dicarboxylic acid of formula (I): HOOC-$(CH_2)_n$-COOH wherein n varies between 12 and 20 (inclusive), comprising the step of maintaining a reaction mixture during polymerisation in a state of uniform liquid, wherein the process is carried out in the absence of added water or in the presence of an amount of added water less than 5 wt.% based on the total weight of the reaction mixture.

The diamine component comprises a minimum of at least 50 mol.% of *p*-xylylene diamine (PXD) and/or *m*-xylylene diamine (MXD), based on the total number of moles of diamine involved in the process. In some embodiments, the diamine component comprises at least 55 mol.% of PXD and/or MXD, at least about 60 mol. %, at least about 65 mol. %, at least about 70 mol. %, at least about 75 mol. %, at least about 80 mol. %, at least about 85 mol. %, at least about 90 mol. %, at least about 95 mol. % or preferably at least about 98 mol. %, based on the total number of moles of diamine involved in the process. In some other embodiments, the diamine component consists in *p*-xylylene diamine (PXD), *m*-xylylene diamine (MXD) or a mixture of both.

The dicarboxylic acid component comprises a minimum of at least 50 mol.% of dicarboxylic acid of formula (I), based on the total number of moles of dicarboxylic acid involved in the process. In some embodiments, the dicarboxylic acid component comprises at least 55 mol.% of dicarboxylic acid of formula (I), at least about 60 mol. %, at least about 65 mol. %, at least about 70 mol. %, at least about 75 mol. %, at least about 80 mol. %, at least about 85 mol. %, at least about 90 mol. %, at least about 95 mol. % or preferably at least about 98 mol. %, based on the total number of moles of dicarboxylic acid involved in the process. In some other embodiments, the dicarboxylic acid component consists in dicarboxylic acid of formula (I).

The present invention preferably relates to a process for preparing a polyamide (PA) by melt-polymerization of a diamine component consisting in *p*-xylylene diamine (PXD) and/or *m*-xylylene diamine (MXD), and a dicarboxylic acid component consisting in a dicarboxylic acid of formula (I): HOOC-$(CH_2)_n$-COOH wherein n varies between 12 and 20 (inclusive), preferably wherein n is 16.

The polyamide (PA) described herein comprises recurring units ($R_{PA}$) of formula (II):

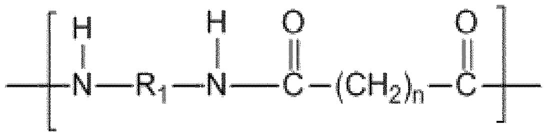

(I)

wherein

n varies between 12 and 20, inclusive, preferably n equals 16, and
$R_1$ is *m*-xylylene (MX) and/or *p*-xylylene (PX).

The polyamide (PA) described herein may be a polyamide consisting essentially in recurring units ($R_{PA}$) or a copolyamide (PA) comprising recurring units ($R_{PA}$). More precisely, the expression "copolyamide" is hereby used for designating copolyamides comprising recurring units ($R_{PA}$) derived from MXD and/or PXD, and at least one dicarboxylic acid HOOC-$(CH_2)_n$-COOH, wherein n varies between 12 and 22, inclusive, as well as recurring units ($R_{PA}$*), distinct from recurring units ($R_{PA}$).

In some embodiments, the polyamide (PA) consists essentially in recurring units ($R_{PA}$) derived from *m*-xylylene diamine (MXD) and/or *p*-xylylene diamine (PXD), and 1,18-octadecanedioic acid.

In some other embodiments, the polyamide (PA) consists essentially in recurring units ($R_{PA}$) derived from *m*-xylylene diamine (MXD) and 1,18-octadecanedioic acid.

In some other embodiments yet, the polyamide (PA) consists essentially in recurring units ($R_{PA}$) derived from *p*-xylylene diamine (PXD) and 1,18-octadecanedioic acid.

When the polyamide (PA) comprises recurring units ($R_{PA}$*), the recurring units ($R_{PA}$*) may be of formula (III) and/or (IV):

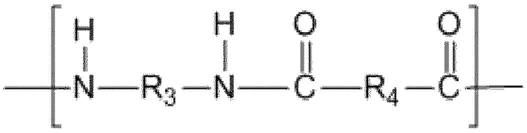

(III)

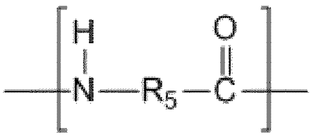

(IV)

wherein

$R_3$ is selected from the group consisting of a bond, a $C_1$-$C_{15}$ alkyl and a $C_6$-$C_{30}$ aryl, optionally comprising one or more heteroatoms (e.g. O, N or S) and optionally substituted with one or more substituents selected from the group consisting of halogen (e.g. fluorine, chlorine, bromine or iodine), hydroxy (-OH), sulfo (-$SO_3$M) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl;

$R_4$ is selected from the group consisting of a $C_1$-$C_{20}$ alkyl and a $C_6$-$C_{30}$ aryl, optionally comprising one or more heteroatoms (e.g. O, N or S) and optionally substituted with one or more substituents selected from the group consisting of halogen (e.g. fluorine, chlorine, bromine or iodine), hydroxy (-OH), sulfo (-$SO_3$M) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl; and

$R_5$ is selected from the group consisting of a linear or branched $C_2$-$C_{14}$ alkyl, optionally comprising one or more heteroatoms (e.g. O, N and S) and optionally substituted with one or more substituents selected from the group consisting of halogen (e.g. fluorine, chlorine, bromine and iodine), hydroxy (-OH), sulfo (-$SO_3$M) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$

aryl.

The polyamide (PA) described herein may be of formula (V):

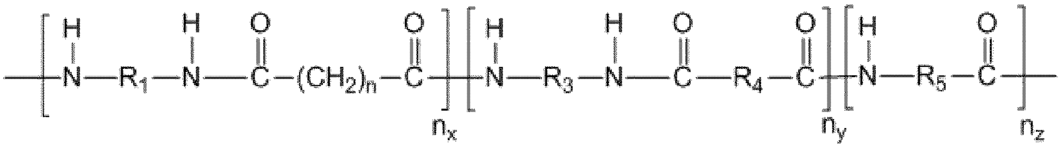

(V)

wherein

$n_x$, $n_y$ and $n_z$ are respectively the moles % of each recurring units x, y and z;
recurring units x, y and z are arranged in blocks, in alternation or randomly;
$n_x + n_y + n_z = 100$;
$5 \leq n_x \leq 100$;
$R_1$, $R_3$, $R_4$ and $R_5$ being as described above.

The polyamides (PA) described herein may have a number average molecular weight Mn ranging from 1,000 g/mol to 40,000 g/mol, for example from 2,000 g/mol to 35,000 g/mol or from 4,000 to 30,000 g/mol. The number average molecular weight Mn can be determined using equation (1):

$$Mn = \frac{2{,}000{,}000}{\sum_i [EG_i]}$$

wherein $[EG_i]$ is the concentration of end-groups of the PA in μmol/g, more precisely known methods to measure amine end groups concentration and acid end groups concentrations.

In the polyamide (PA) described herein, the recurring unit y may be aliphatic or aromatic. For the purpose of the present invention, the expression "aromatic recurring unit" is intended to denote any recurring unit that comprises at least one aromatic group. The aromatic recurring units may be formed by the polycondensation of at least one aromatic dicarboxylic acid with an aliphatic diamine or by the polycondensation of at least one aliphatic dicarboxylic acid with an aromatic diamine, or by the polycondensation of aromatic aminocarboxylic acids, or by the polycondensation of at least one aromatic dicarboxylic acid with an aromatic diamine. For the purpose of the present invention, a dicarboxylic acid or a diamine is considered as "aromatic" when it comprises one or more than one aromatic group.

In the polyamide (PA) described herein, the recurring unit z is aliphatic and $R_5$ is a linear or branched $C_2$-$C_{14}$ alkyl, optionally comprising one or more heteroatoms (e.g. O, N and S) and optionally substituted with one or more substituents selected from the group consisting of halogen, hydroxy, sulfo, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl.

The polyamide (PA) described herein may be composed of recurring units x and y, or of recurring units x and z, or of recurring units x, y and z. Recurring units x, y and z are arranged in blocks, in alternation or randomly.

In the present application :

- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

Throughout this document, all temperatures are given in degrees Celsius (°C).

Unless specifically limited otherwise, the term "alkyl", as well as derivative terms such as "alkoxy", "acyl" and

"alkylthio", as used herein, include within their scope straight chain, branched chain and cyclic moieties. Examples of alkyl groups are methyl, ethyl, 1-methylethyl, propyl, 1,1-dimethylethyl, and cyclo-propyl. Unless specifically stated otherwise, each alkyl and aryl group may be unsubstituted or substituted with one or more substituents selected from but not limited to halogen, hydroxy, sulfo, $C_1$-$C_6$ alkoxy,$C_1$-$C_6$ alkylthio, $C_1$-$C_6$ acyl, formyl, cyano, $C_6$-$C_{15}$ aryloxy or $C_6$-$C_{15}$ aryl, provided that the substituents are sterically compatible and the rules of chemical bonding and strain energy are satisfied. The term "halogen" or "halo" includes fluorine, chlorine, bromine and iodine, with fluorine being preferred.

The term "aryl" refers to a phenyl, indanyl or naphthyl group. The aryl group may comprise one or more alkyl groups, and are called sometimes in this case "alkylaryl"; for example may be composed of a cycloaromatic group and two $C_1$-$C_6$ groups (e.g. methyl or ethyl). The aryl group may also comprise one or more heteroatoms, e.g. N, O or S, and are called sometimes in this case "heteroaryl" group; these heteroaromatic rings may be fused to other aromatic systems. Such heteroaromatic rings include, but are not limited to furanyl, thienyl, pyrrolyl, pyrazolyl, imidazolyl, triazolyl, isoxazolyl, oxazolyl, thiazolyl, isothiazolyl, pyridyl, pyridazyl, pyrimidyl, pyrazinyl and triazinyl ring structures. The aryl or heteroaryl substituents may be unsubstituted or substituted with one or more substituents selected from but not limited to halogen, hydroxy, $C_1$-$C_6$ alkoxy, sulfo, $C_1$-$C_6$ alkylthio, $C_1$-$C_6$ acyl, formyl, cyano, $C_6$-$C_{15}$ aryloxy or $C_6$-$C_{15}$ aryl, provided that the substituents are sterically compatible and the rules of chemical bonding and strain energy are satisfied.

Melt-polymerization process

The process of the present invention is a polymerization process of a diamine component and a dicarboxylic acid component in the melt in the absence of water. One of essential feature of the process of the present invention is that it is carried out in the absence of added water or in the presence of an amount of added water which is less than 5 wt.%, based on the total weight of the reaction mixture. While water is generated during the polycondensation, according to the present invention, no additional water or a very limited quantity of added water is added in the reaction mixture. The quantity of added water that can be added to the reaction mixture is less than 5 wt.%, preferably less than 4 wt.%, less than 3 wt.%, less than 2 wt.%, less than 1 wt.%, or even less than 0.5 wt.%, based on the total weight of the reaction mixture.

The water generated during the polycondensation from the formation of amide bonds from the acid and amine functions is preferably removed from the reactor during the process. The water generated during the process is preferably removed by evaporation, for example by fractional distillation using a condenser, at a pressure between 1 mbar and 10 bar, preferably between 10mbar and 5 bar.

The process of the present invention may be carried out under pressure, for at least some parts of the process. In these instances, a maximum pressure of 10 bar, preferably at a maximum pressure of 5 bar, more preferably at a maximum pressure of 3 bar, is used. The end of the process is anyhow preferably performed at low pressure (vacuum or atmospheric pressure), in order to drive the reaction towards completion and remove more easily the water formed during the reaction.

The process can be carried out in equipment made from materials inert toward the monomers. In this case, the equipment is chosen in order to provide enough contact of diamine component and a dicarboxylic acid component, and in which the removal of volatile reaction products, notably the water, is feasible. Suitable equipment includes agitated reactors, extruders and kneaders. The reaction vessel is preferably equipped with stirring means, for example rotating shaft.

The reaction mixture is continuously in a state of uniform liquid during polymerisation. The temperature at which the reaction mixture should be heated in order for the reaction mixture to be in a state of uniform liquid can be determined by determining the melting point of the polyamide under preparation, as explained above. The reaction mixture may for example be heated at a temperature T (°C) which is such that:

$$T \geq Tm_{PA} - 15,$$

wherein $Tm_{PA}$ is the melting point of the polyamide under preparation, which depends on the ratio of monomers in physically present in the reactor and conversion.

The reaction mixture may preferably be heated at a temperature T (°C) which is such that

$$T \geq Tm_{PA} - 10,$$

$$T \geq Tm_{PA} - 5,$$

$$T \geq Tm_{PA},$$

$$T \geq Tm_{PA} + 5,$$

or

$$T \geq Tm_{PA} + 10.$$

In some embodiments, either the dicarboxylic acid component or the diamine component is fed in the reaction vessel and the remaining component sequentially and or continuously added in the reaction mixture. In the context of the present process, the term "sequentially" means in sequence, for example in a series of sequential additions (at least two additions) to the reaction vessel with an interruption between the additions; the term "continuously" means progressively towards conversion of the reactants involved in the reaction mixture. The continuous feeding of one of the component in the reaction vessel can for example be dropwise.

According to a preferred embodiment, the dicarboxylic acid component is fed in the reaction vessel and molten and the diamine component is subsequently added to the molten dicarboxylic acid component. The dicarboxylic acid component may be fed to the reaction vessel either in a molten form or in a solid form, wherein the solid fed is melted by heating the vessel to a temperature Ta (°C) higher than its melting point $Tm_{DA}$ (°C), to produce a molten dicarboxylic acid component.

In order to produce a polyamide having high quality according to the present invention, it is desirable to introduce an inert gas, such as nitrogen gas, into the reaction vessel to replace the atmosphere in the vessel with the gas prior to or after the feed of the diamine or dicarboxylic acid component.

The dicarboxylic acid component used in the process of the present invention contains at least 50 mol.% of dicarboxylic acid of formula (I). Other dicarboxylic acids which may be used in combination with the dicarboxylic acid $HOOC-(CH_2)_n-COOH$ wherein n varies between 12 and 20 (inclusive). The dicarboxylic acid component may further comprise at least one additional dicarboxylic acid selected from the group consisting of adipic acid, azelaic acid, sebacic acid, 1,12-dodecanedioic acid, isophthalic acid, terephthalic acid, 2,6-naphthalene dicarboxylic acid, 4,4'-bibenzoic acid, 5-hydroxyisophthalic acid, 5-sulfophthalic acid, 1,4-cyclohexanedicarboxylic acid, 1,3-cyclohexanedicarboxylic acid and mixture thereof.

The diamine component used in the process of the present invention contains at least 50 mol.% of *p*-xylylene diamine and/or *m*-xylylene diamine. The diamine component may further comprise at least one additional diamine selected from the group consisting of 1,4-diaminobutane, 1,5-diamonopentane, 2-methyl-1,5-diaminopentane, hexamethylenediamine, 1,9-diaminononane, 2-methyl-1,8-diaminooctoane, 1,10-diaminodecane, 1,12-diaminododecane, $H_2N-(CH_2)_3-O-(CH_2)_2-O(CH_2)_3-NH_2$, bis(4-amino-3-methylcyclohexyl)methane (MACM), bis(4-aminocyclohexyl)methane (MACM), 1,3-bisaminomethylcyclohexane, 1,4-bisaminomethylcyclohexane, and mixture thereof.

Components for forming the polyamide (PA) other than the diamine component and the dicarboxylic acid component can be used. Examples of these components include lactams such as caprolactam, valerolactam, laurolactam and undecalactam, and aminocarboxylic acids such as 11-aminoundecanoic acid. 12-aminododecanoic acid, 4-aminomethylbenzoic acid and 3-(aminomethyl)benzoic acid.

In some embodiments, the process is preferably carried out in the absence of certain monomers or components, or in the presence of a minimal quantity of this monomers or components, for example diesters (e.g. 4,4-dimethyl bibenzoate).

Phosphorus compounds, catalysts and/or stabilizers, may also be added to the polyamide. As the phosphorus compound, phosphoric acid, phosphorous acid, hypo-phosphorous acid, salts of these acids and ester compounds of these acids can be used. The phosphorus compound may be added to the diamine component or the dicarboxylic acid component or may be added during the polymerization.

In some preferred embodiments, the process comprises the steps of:

a) heating the dicarboxylic acid component at a temperature Ta (°C) higher than its melting point $Tm_{DA}$ (°C), to produce a molten dicarboxylic acid component, and

b) sequentially, progressively or continuously adding the diamine component to the molten dicarboxylic acid component, in order to prepare the polyamide (PA).

According to these embodiments, the dicarboxylic acid component may for example be heated to at least 100°C, preferably at least 120°C or at least 150°C.

In some other preferred embodiments, the process comprises the steps of:

a) heating the dicarboxylic acid component at a temperature Ta (°C) higher than its melting point $Tm_{DA}$ (°C), to produce a molten dicarboxylic acid component, and
b) adding a first molar amount ($n_1$) of the diamine component to the molten dicarboxylic acid component and raising the temperature of the reaction mixture to a temperature Tb (°C) such that the reaction mixture is in a state of uniform liquid,
c) adding a second molar amount ($n_2$) of the diamine component to the molten dicarboxylic acid component and raising the temperature of the reaction mixture to a temperature Tc (°C) such that the reaction mixture is maintained in a state of uniform liquid,
d) repeating step c) until the overall molar ratio of the diamine component to the dicarboxylic acid component is within the range of 0.90 to 1.10, preferably 0.95 to 1.05, more preferably 0.98 to 1.02.

According to these embodiments, the temperatures Tb, Tc, Td... etc, are such that Tb < Tc < Td... etc.
According to these embodiments, the temperatures Tb, Tc, Td... etc, at which the reaction mixture should be heated in order for the reaction mixture to be in a state of uniform liquid can be determined by determining the melting point of the polyamide under preparation:

- polyamide (PA1) obtained from the complete conversion of the molar amount ($n_1$) of the diamine component (limited molar amount), having a melting point $Tm_{PA1}$,
- polyamide (PA2) obtained from the complete conversion of the molar amount ($n_1$) + ($n_2$) of the diamine component (limited molar amount), having a melting point $Tm_{PA2}$,
- polyamide (PA3) obtained from the complete conversion of the molar amount ($n_1$) + ($n_2$) + ($n_3$) of the diamine component (limited molar amount), having a melting point $Tm_{PA3}$, ...etc.

The number average molecular weight Mn of each polyamides PA1, PA2, PA3, etc can be determined using a series of four equations described below.
The degree of polymerization in number (DPn) of polyamide PA1, PA2, PA3, etc can be calculated by the equation (2):

$$DPn = \frac{(1+r)}{(1-r)} \qquad (2)$$

with r being the molar ratio of diamine component to dicarboxylic acid component and r <1.
When the diamine is added in excess at the end of the reaction, the degree of polymerization in number (DPn*) is according to equation (3):

$$DPn^* = \frac{(1+r^*)}{(1-r^*)} \qquad (3)$$

with r* being the molar ratio of diamine component to dicarboxylic acid component.
The number average molecular weight (Mn) is then according to equation (4):

$$Mn = DPn\,.\,M^{\circ} \qquad (4)$$

with $M^o$ being the molecular weight of the monomer unit.
The molecular weight of the monomer unit ($M^0$) is calculated according to equation (5):

$$M^{\circ} = (Ma + Mb - 2\,x18)/2 \qquad (5)$$

with Ma being the molecular weight of the diamine component and Mb being the molecular weight of the diacid component.
As an example, in the case of a polyamide prepared from PXD and 1,18-octadecanedioic acid exclusively, the molecular weight of the monomer unit $M^o$ is 207 g/mol. If then the molar ratio $r_1$ is 0.5, then the degree of polymerization ($DPn_1$) in number is 3 and the number average molecular weight Mn1 is 621 g/mol.

In step b) of the preferred embodiments, the reaction mixture may for example be heated at a temperature Tb (°C) which is such that:

$$Tb \geq Tm_{PA1} - 15,$$

wherein $Tm_{PA1}$ is the melting point of the polyamide (PA1) under preparation. The reaction mixture may preferably be heated in step b) at a temperature Tb (°C) such that $Tb \geq Tm_{PA1} - 10$; $Tb \geq Tm_{PA1} - 5$; $Tb \geq Tm_{PA1}$; $Tb \geq Tm_{PA1} + 5$; or $Tb \geq Tm_{PA1} + 10$.

In step c) of the preferred embodiments, the reaction mixture may for example be heated at a temperature Tc (°C) which is such that:

$$Tc \geq Tm_{PA2} - 15,$$

wherein $Tm_{PA2}$ is the melting point of the polyamide (PA2) under preparation. The reaction mixture may preferably be heated in step c) at a temperature Tc (°C) such that $Tc \geq Tm_{PA2} - 10$; $Tc \geq Tm_{PA2} - 5$; $Tc \geq Tm_{PA2}$; $Tc \geq Tm_{PA2} + 5$; or $Tc \geq Tm_{PA2} + 10$.

According to these embodiments, the addition of the first molar amount (n1) of the diamine component to the molten dicarboxylic acid component may be sequential, progressive or continuous. Additionally, the addition of the second molar amount (n2) of the diamine component to the molten dicarboxylic acid component, independently from the addition of the first molar amount (n1), may also be sequential, progressive or continuous. The same holds true for all the subsequent additions of further molar amounts (n3), (n4)..., until the overall molar ratio of the diamine component to the dicarboxylic acid component is within the range of 0.90 to 1.10, preferably 0.95 to 1.05, more preferably 0.98 to 1.02.

According to one embodiment, the addition of the first/second/third molar amount (n1)/(n2)/(n3) etc... of the diamine component to molten dicarboxylic acid component and the rise of temperature are carried out concomitantly.

According to one embodiment, the rise of temperature is carried out after the addition of the first/second/third molar amount (n1)/(n2)/(n3) of the diamine component to the molten dicarboxylic acid component.

In these preferred embodiments, step c) is repeating as many times as needed until the overall molar ratio of the diamine component to the dicarboxylic acid component is within the range of 0.90 to 1.10, preferably 0.95 to 1.05, more preferably 0.98 to 1.02.

The process of the present invention may also comprise the step of measuring and/or monitoring at least one of the following polymerization parameters:

- the molar ratio of the diamine component to the dicarboxylic acid component in a reaction mixture,
- the temperature of the reaction mixture (°C),
- the pressure of the reaction mixture,
- the water content in the reaction mixture,
- the carboxyl end group concentration,
- the amino end group concentration,
- the molecular weight of the polyamide under polymerization (PA1, PA2, ...),
- the relative viscosity of the polyamide under polymerization (PA1, PA2, ...), or
- the melt viscosity of the polyamide under polymerization (PA1, PA2, ...).

The process of the present invention may also comprise the step of determining a time for further continuing the polymerization and the timing for changing the polymerization conditions on the basis of measured polymerization parameters. This step is preferably carried out while continuing the polymerization.

According to the present invention, the diamine component may be continuously added over a period of time ranging from about 0.5 to 10 hours, preferably 10 to 100 minutes.

According to the present invention, the polycondensation can be maintained until the conversion of the components reaches at least 95%, preferably at least 96%, at least 97%, at least 98% or even at least 99%.

The process of the present invention may be carried out in a batch-wise manner or in a continuous manner.

Should the disclosure of any patents, patent applications, and publications which are incorporated herein by reference conflict with the description of the present application to the extent that it may render a term unclear, the present description shall take precedence.

## Example

### Raw Materials

PXD: p-xylylenediamine obtained from Aldrich
C18: 1,18-octadecanedioic acid, Inherent™C18, obtained from Elevance

### Polyamide preparation

**Table 1**

| Molar ratio PXD/C18 | PXD (g) | C18 (g) | NaAcetate (mg) | Catalyst P (ppm) |
|---|---|---|---|---|
| 0.995 | 108 | 251 | 131 | 300 |

The monomers (PXDA, C18) as well as additives (sodium acetate, sodium hypohosphite) were charged into the 6L reactor. The reactor was purged with nitrogen for 10 minutes and then sealed. The polymerization was carried out following the cycle: 60 minutes to 190°C, 90 minutes to 230°C, 90 minutes to 265°C, 40 mins to 285°C. During the heating cycle, the pressure inside the reactor was monitored. A valve was periodically opened to release the steam and keep the internal pressure at 30-50 psi. At the end of the heating cycle, the valve was fully opened to vent and release the steam at atmospheric pressure. When the target distillate yield was reached, the polymer melt was discharged as a strand, cooled down in a water bath and subsequently pelletized. Test data from the characterization of the resins obtained are shown in the table.

### Testing

Thermal transitions (Tm)

The melting temperature of the polyamide was measured using differential scanning calorimetry according to ASTM D3418 employing a heating and cooling rate of 20°C/min. Three scans were used for each DSC test: a first heat up to 340°C, followed by a first cool down to 30°C, followed by a second heat up to 350°C. The Tm was determined from the second heat up.
Tm= 242°C.

Determination of the Mn by End Group Analysis

Calculated using equation (1):

$$Mn = \frac{2{,}000{,}000}{\sum_i [EG_i]} \quad (1)$$

wherein $[EG_i]$ is the concentration of end-groups of the polyamide in μmol/g, more precisely here amine end groups concentration and acid end groups concentrations.
Mn = 12,739 g/mol

### Claims

1. A process for preparing a polyamide (PA) by melt-polymerization of a diamine component containing at least 50 mol.% of *p*-xylylene diamine and/or *m*-xylylene diamine, and a dicarboxylic acid component containing at least 50 mol.% of a dicarboxylic acid of formula (I): $HOOC-(CH_2)_n-COOH$ wherein n varies between 12 and 20 (inclusive),

comprising the step of maintaining a reaction mixture during polymerisation in a state of uniform liquid, wherein the process is carried out in the absence of added water or in the presence of an amount of added water less than 5 wt.% based on the total weight of the reaction mixture.

**2.** The process of claim 1, wherein the dicarboxylic acid of formula (I) is 1,18-octadecanedioic acid.

**3.** The process of any one of the preceding claims, wherein either the dicarboxylic acid component or the diamine component is added sequentially, progressively or continuously in the reaction mixture.

**4.** The process of any one of the preceding claims, comprising:

a) heating the dicarboxylic acid component at a temperature Ta (°C) higher than its melting point $Tm_{DA}$ (°C), to produce a molten dicarboxylic acid component, and
b) sequentially, progressively or continuously adding the diamine component to the molten dicarboxylic acid component, in order to prepare the polyamide (PA).

**5.** The process of any one of the preceding claims, wherein the water generated during the polymerisation is evaporated, for example by fractional distillation using a condenser, at a pressure between 1 mbar and 10 bar.

**6.** The process of any one of the preceding claims, comprising:

a) heating the dicarboxylic acid component at a temperature Ta (°C) higher than its melting point $Tm_{DA}$ (°C), to produce a molten dicarboxylic acid component, and
b) adding a first molar amount ($n_1$) of the diamine component to the molten dicarboxylic acid component and raising the temperature of the reaction mixture to a temperature Tb (°C) such that the reaction mixture is in a state of uniform liquid,
c) adding a second molar amount ($n_2$) of the diamine component to the molten dicarboxylic acid component and raising the temperature of the reaction mixture to a temperature Tc (°C) such that the reaction mixture is maintained in a state of uniform liquid,
d) repeating step c) until the overall molar ratio of the diamine component to the dicarboxylic acid component is within the range of 0.90 to 1.10, preferably 0.95 to 1.05, more preferably 0.98 to 1.02.

**7.** The process of any one of the preceding claims, comprising the step of measuring and/or monitoring at least one of the following polymerization parameters:

- the molar ratio of the diamine component to the dicarboxylic acid component in a reaction mixture,
- the temperature of the reaction mixture (°C),
- the water content in the reaction mixture,
- the carboxyl end group concentration,
- the amino end group concentration,
- the molecular weight of the polyamide under polymerization (PA1, PA2, PA3...),
- the relative viscosity of the polyamide under polymerization (PA1, PA2, PA3...), or
- the melt viscosity of the polyamide under polymerization (PA1, PA2, PA3...).

**8.** The process of any one of the preceding claims, comprising the step of determining a time for further continuing the polymerization and the timing for changing the polymerization conditions on the basis of measured polymerization parameters.

**9.** The process of any one of the preceding claims, wherein the diamine component is continuously added over a period of time ranging from 0.5 to 10 hours, preferably from 10 to 100 minutes.

**10.** The process of any one of the preceding claims, wherein:

- the dicarboxylic acid component further comprises at least one additional dicarboxylic acid selected from the group consisting of adipic acid, azelaic acid, sebaic acid, isophthalic acid, terephthalic acid, 2,6-naphthalene dicarboxylic acid, 4,4'-bibenzoic acid, 5-hydroxyisophthalic acid, 5-sulfophthalic acid, and mixture thereof, and/or
- the diamine component further comprises at least one additional diamine selected from the group consisting of 1,4-diaminobutane, 1,5-diamonopentane, 2-methyl-1,5-diaminopentane, hexamethylenediamine, 1,9-diaminononane, 2-methyl-1,8-diaminooctoane, 1,10-diaminedecane, 1,12-diaminododecane, $H_2N-(CH_2)_3-O-(CH_2)_2-O(CH_2)_3-NH_2$, bis(4-amino-3-methylcyclohexyl)methane (MACM), bis(4-aminocyclohexyl)methane (MACM), and mixture thereof.

**11.** The process of any one of the preceding claims, wherein the reaction mixture further comprises an aminoacid and/or a lactam selected from the group consisting of caprolactam, laurolactam, 11-aminoundecanoic acid and mixture thereof.

**12.** The process of any one of the preceding claims, wherein the polyamide comprises at least 50 mol.% of recurring units ($R_{PA}$) of formula (II) (based on the total number of moles in the polyamide):

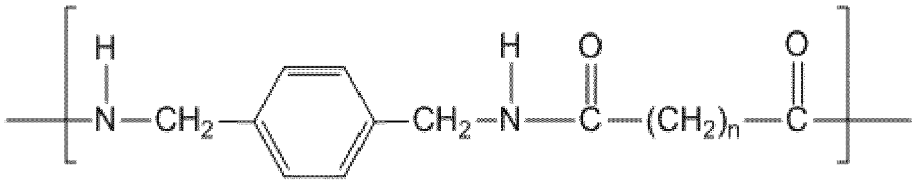

(II)

wherein n varies between 12 and 20 (inclusive).

**13.** The process of any one of the preceding claims, wherein the polycondensation is maintained until the conversion of the components reaches at least 95%.

**14.** The process of any one of the preceding claims, being carried out in a batch-wise manner or in a continuous manner.

**15.** The process of any one of the preceding claims, wherein the polyamides (PA) have a number average molecular weight Mn ranging from 1,000 g/mol to 40,000 g/mol, wherein:

- Mn is calculated by the following formula:

$$Mn = \frac{2,000,000}{\sum_i [EG_i]}$$

wherein $[EG_i]$ is the concentration of end-groups of the PA in $\mu$mol/g.

Europäisches Patentamt
European Patent Office
Office européen des brevets

# EUROPEAN SEARCH REPORT

Application Number
EP 19 17 2336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 2 297 227 A1 (ARKEMA FRANCE [FR]) 23 March 2011 (2011-03-23)<br>* page 17, lines 4-16 - page 22; claims 5-8; example C; table 1 *<br>----- | 1<br>2-15 | INV.<br>C08G69/26<br>C08G69/28 |
| Y | EP 2 327 738 A1 (MITSUBISHI GAS CHEMICAL CO [JP]) 1 June 2011 (2011-06-01)<br>* pages 2, 3, paragraphs 0001, 0007-0008 - page 6, paragraph 0031; example 1 *<br>----- | 2-9, 12-15 | |
| Y | EP 0 071 000 A2 (MITSUBISHI GAS CHEMICAL CO [JP]) 9 February 1983 (1983-02-09)<br>* page 11 - line 4; example 4 *<br>----- | 2-10, 12-15 | |
| Y | JP 2014 201723 A (MITSUBISHI GAS CHEMICAL CO) 27 October 2014 (2014-10-27)<br>* page 10 - paragraph 0070; example 1 *<br>----- | 2-15 | |

TECHNICAL FIELDS SEARCHED (IPC)

C08G

The present search report has been drawn up for all claims

2

| Place of search | Date of completion of the search | Examiner |
|---|---|---|
| Munich | 10 September 2019 | Stefaniu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 17 2336

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2019

| Patent document cited in search report | Publication date | Patent family member(s) | Publication date |
|---|---|---|---|
| EP 2297227 A1 | 23-03-2011 | CN 102089354 A | 08-06-2011 |
| | | EP 2297227 A1 | 23-03-2011 |
| | | FR 2933415 A1 | 08-01-2010 |
| | | JP 2011527369 A | 27-10-2011 |
| | | US 2011165359 A1 | 07-07-2011 |
| | | WO 2010004194 A1 | 14-01-2010 |
| EP 2327738 A1 | 01-06-2011 | BR PI0918857 A2 | 01-12-2015 |
| | | CN 102159621 A | 17-08-2011 |
| | | EP 2327738 A1 | 01-06-2011 |
| | | ES 2444766 T3 | 26-02-2014 |
| | | HK 1156644 A1 | 28-06-2013 |
| | | JP 5664242 B2 | 04-02-2015 |
| | | JP WO2010032692 A1 | 09-02-2012 |
| | | KR 20110084157 A | 21-07-2011 |
| | | RU 2011115094 A | 27-10-2012 |
| | | TW 201016748 A | 01-05-2010 |
| | | US 2011245454 A1 | 06-10-2011 |
| | | WO 2010032692 A1 | 25-03-2010 |
| EP 0071000 A2 | 09-02-1983 | DE 3273530 D1 | 06-11-1986 |
| | | EP 0071000 A2 | 09-02-1983 |
| | | JP H0114925 B2 | 15-03-1989 |
| | | JP S57200420 A | 08-12-1982 |
| | | US 4433136 A | 21-02-1984 |
| JP 2014201723 A | 27-10-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CA 2565483, Degussa


### Non-patent literature cited in the description


- **KAZUO SAOTONE ; HIROSHI KOMOTO.** *Journal of Polymer Science,* 1967, vol. 5, 107-117
- **HEIDECKER et al.** *Antec,* 2002, vol. 3, 3624-3628